Europäisches Patentamt

European Patent Office

Office européen des brevets

(11) Numéro de publication: **0 390 247**
**A1**

## DEMANDE DE BREVET EUROPEEN

(21) Numéro de dépôt: **90200616.2**

(22) Date de dépôt: **16.03.90**

(51) Int. Cl.⁵: **A01N 63/00**

(30) Priorité: **31.03.89 FR 8904393**

(43) Date de publication de la demande:
**03.10.90 Bulletin 90/40**

(84) Etats contractants désignés:
**AT BE CH DE DK ES FR GB GR IT LI LU NL SE**

(71) Demandeur: **SOLVAY & Cie (Société Anonyme)**
**Rue du Prince Albert, 33**
**B-1050 Bruxelles(BE)**

(72) Inventeur: **Detroz, René**
**Chaussée de Louvain, 534**
**B-1328 Ohain(BE)**
Inventeur: **Charmoille, Lucien**
**Rue Vervloesem, 159**
**B-1200 Bruxelles(BE)**

(74) Mandataire: **Nichels, William et al**
**Solvay & Cie Département de la Propriété Industrielle Rue de Ransbeek, 310**
**B-1120 Bruxelles(BE)**

(54) Compositions concentrées et fluides contenant des produits pesticides biosynthétiques, procédés pour leur production et leur utilisation.

(57) Les compositions contiennent un produit pesticide biosynthétique, provenant de microorganismes de l'ordre des Bacillacées, en suspension dans un liquide et au moins un sel choisi parmi le sulfate d'ammonium et le sulfate de sodium.

Les compositions sont concentrées, fluides et stables.

Les compositions sont efficaces contre les insectes.

## Compositions concentrées et fluides contenant des produits pesticides biosynthétiques, procédés pour leur production et leur utilisation

La présente invention concerne des compositions contenant des produits pesticides biosynthétiques provenant de microorganismes de l'ordre des Bacillacées ainsi que des procédés pour leur production et leur utilisation.

Les produits pesticides biosynthétiques présentent de nombreux avantages par rapport aux pesticides chimiques, notamment du fait de leur grande spécificité. Ainsi, les pesticides biosynthétiques toxiques ou pathogènes pour des insectes sont en général non toxiques et non pathogènes pour l'homme et les autres êtres vivants. En outre, vu leur spécificité, ils ne mettent en général pas en danger les prédateurs et parasites naturels des insectes que l'on désire éliminer, ni les insectes bénéfiques. Ils ne sont pas phytotoxiques et ne laissent aucun résidu toxique. Enfin, les insectes ne paraissent pas développer une résistance à ce type de pesticides, contrairement à ce qui se passe lors de l'utilisation d'insecticides organiques de synthèse.

Les pesticides biosynthétiques peuvent être obtenus à partir de microorganismes très divers. Les classes de pesticides biosynthétiques les plus couramment utilisés dans la lutte contre certains insectes sont obtenues à partir de Bacillus thuringiensis et de Bacillus sphaericus dont on connaît de nombreuses variétés.

Les pesticides biosynthétiques n'étant en général pas solubles, ils nécessitent la mise en oeuvre de techniques particulières pour leur application. Ils peuvent se présenter sous forme de particules solides sèches ou sous forme de suspensions de particules solides dans un liquide adéquat. En général, ils sont mis en oeuvre sous forme de suspensions que l'on pulvérise sur les zones infestées selon diverses techniques connues en elles-mêmes. Une technique fréquemment utilisée pour traiter de grandes surfaces telles que des forêts ou de grandes étendues de terres cultivées ou encore de grandes étendues d'eau, de marécages ou de rivières consiste à pulvériser par voie aérienne des suspensions de pesticides biosynthétiques.

Dans le brevet US 3087865, on a proposé de préparer des compositions pesticides biosynthétiques qui contiennent des spores, des corps d'inclusion (cristaux) et les toxines solubles provenant de microorganismes du genre Bacillus tels que le Bacillus thuringiensis, ces compositions peuvent se présenter notamment sous forme de suspensions qui peuvent entre autres contenir divers stabilisants tels que des sels de métaux alcalins ou alcalino-terreux.

De même, on a proposé dans le brevet FR 1393646 d'incorporer de petites proportions d'un ou de plusieurs sels métalliques hydrosolubles dans les suspensions insecticides bactériennes en vue d'empêcher la production de mauvaises odeurs.

Cependant, jusqu'à présent, cette addition de stabilisants connus n'a pas permis de résoudre des problèmes critiques nécessaires à l'obtention de bonnes compositions utilisables sur le terrain. Ainsi, il n'a pas été possible avec les stabilisants connus de préparer des compositions stables, conservant une bonne activité au cours du stockage et qui simultanément permettent d'inhiber le dégagement d'odeurs désagréables qui se produisent lors du stockage des suspensions ni d'arrêter le gonflement ou la rétraction des fûts contenant les compositions pesticides biosynthétiques. De même, il n'a pas été possible de mettre en oeuvre les produits pesticides biosynthétiques à n'importe quel pH, tel qu'un pH neutre, légèrement acide ou légèrement basique, malgré l'addition d'agents bactéricides ou bactériostatiques. Par ailleurs, dans le but de remédier à ces inconvénients, l'addition de certains composés, tels que le xylène, à ces compositions biosynthétiques a été fortement déconseillée parce que conduisant à des compositions toxiques pour les animaux à sang chaud et/ou froid.

La présente invention vise à procurer des compositions contenant des produits pesticides biosynthétiques ne présentant pas les inconvénients de ces compositions connues. Elle vise à procurer des compositions de produits pesticides biosynthétiques qui sont stables, qui conservent une bonne activité au cours du stockage, qui ne présentent pas de dégagement gazeux, dont la couleur et la viscosité n'évoluent pas dans le temps. Par ailleurs, les fûts contenant ces compositions ne gonflent pas ou ne se rétractent pas, même après un temps de stockage assez long à température ambiante ou lorsque le produit pesticide biosynthétique a un pH neutre, légèrement acide ou légèrement basique. Elle vise également à procurer des compositions aptes à recevoir l'agrément des départements officiels de l'agriculture parce que non toxiques en pratique pour les animaux à sang chaud et/ou froid. Elle vise également à obtenir des compositions liquides très fluides malgré leur forte concentration en matières actives. Les compositions de l'invention ont une concentration en matières actives élevée de manière à ce que le volume à transporter pour une dose de matière active donnée soit faible; elles sont par ailleurs extrêmement fluides, leur viscosité étant suffisamment faible pour pouvoir être aisément pulvérisées.

En conclusion, les compositions selon l'invention allient des caractéristiques dissemblables, elles sont en effet très fluides, stables, se dispersent spontanément dans l'eau et ont une concentration en matières actives très élevée.

L'invention concerne à cet effet des compositions contenant des produits pesticides biosynthétiques provenant de microorganismes de l'ordre des Bacillacées sous forme de particules solides en suspension dans un liquide et contenant au moins un sel choisi parmi le sulfate d'ammonium, le sulfate de sodium ou un mélange de ceux-ci.

Les compositions préférées selon l'invention sont celles qui contiennent du sulfate d'ammonium.

Dans les compositions selon l'invention le sel peut être présent à des doses variables compatibles avec le produit pesticide biosynthétique particulier mis en oeuvre et dans la limite de solubilité du sel. En général la quantité de sel est comprise entre 10 et 60 % en poids de liquide.

Lorsque le sel est du sulfate d'ammonium la quantité mise en oeuvre est comprise entre 20 et 50 % et de préférence entre 25 et 45 % en poids de liquide.

Lorsque le sel est du sulfate de sodium la quantité mise en oeuvre est comprise entre 12 et 25 % et de préférence entre 15 et 22 % en poids de liquide.

Les compositions selon l'invention sous forme de suspension dans un liquide contenant de l'eau ont une durée de conservation élevée dans une zone de pH comprise entre 3,5 et 8,5.

Plus particulièrement, les compositions de l'invention sont utilisables dans des zones de pH acides comprises entre des pH de 3,5 et 6,5, des zones de pH neutres comprises entre des pH de 6,5 et 7,5 et des zones de pH basiques comprises entre des pH de 7,5 et 8,5. Il résulte de cette situation que les compositions de l'invention peuvent être mises en oeuvre en ajustant le pH à des valeurs situées dans l'une quelconque des zones précitées. Par ailleurs, cette situation permet d'obtenir des compositions stables dont le pH peut évoluer librement sans qu'il faille prendre des mesures drastiques pour fixer le pH dans le temps. En bref, il résulte de cette situation que les compositions selon l'invention peuvent être conservées sans danger plus longtemps que les compositions connues antérieurement.

Par pesticides biosynthétiques provenant de microorganismes de l'ordre des Bacillacées, on entend également des microorganismes transformés par insertion d'ADN codant pour la fabrication de toxines et provenant d'autres microorganismes.

Les pesticides biosynthétiques provenant de l'ordre des Bacillacées peuvent se trouver dans les compositions concentrées selon l'invention sous des formes très diverses. Ainsi, ils peuvent se présenter sous la forme des organismes eux-mêmes à un stade quelconque de leur évolution, en ce comprises les formes végétatives éventuelles, tels quels, en association avec leur milieu de culture, sous forme totalement ou partiellement lysée, sous forme totalement ou partiellement sporulée, sous une forme ayant libéré partiellement ou totalement les spores par divers moyens tels que l'autolyse bactérienne, ou sous la forme des produits qui sont excrétés spontanément par les organismes tels que les exotoxines, sous la forme des produits que l'on peut extraire de ces organismes tels que les endotoxines par toute méthode connue en elle-même impliquant ou non une lyse de l'organisme en cause, sous la forme des produits éventuellement libérés par les organismes au cours de certaines étapes de leur évolution (cristaux ou endotoxines associés ou non aux spores) ou encore sous plusieurs de ces formes simultanément.

Ces différentes formes peuvent éventuellement être associées à des résidus du milieu de culture. De bons résultats ont été obtenus avec le mélange contenant les spores, les cristaux ou les endotoxines associés et éventuellement des exotoxines qui se forment spontanément lors de l'autolyse de la bactérie en fin de sporulation. Un tel mélange peut contenir, outre les spores, les cristaux associés ou non aux spores et les exotoxines éventuelles, des cellules ou des débris de cellules ainsi que des produits solides résiduaires de milieu nutritif mis en oeuvre lors de la culture.

Comme microorganismes de l'ordre des bacillacées convenant bien en général comme source de pesticides biosynthétiques, on utilise les microorganismes du genre Bacillus tels que le Bacillus thuringiensis, le Bacillus sphaericus, le Bacillus popilliae, le Bacillus cereus, le Bacillus larvae, le Bacillus lentimorbus, le Bacillus fribourgensis et le Bacillus penetrans (Pasteuria).

De bons résultats ont été obtenus avec les Bacillus sphaericus et les Bacillus thuringiensis de tous sérotypes, y compris les bactéries issues de transformation génétique, et plus particulièrement les Bacillus sphaericus de sérotypes 1a, 2a2b, 2a2c, 5a5b, 6, 25, 26a26b, 26a26c et les Bacillus thuringiensis de sérotypes 1, 3a, 3a3b, 4, 6, 7, 8, 8a8b, 9, 10 et 14. Les meilleurs résultats ont été obtenus avec le Bacillus sphaericus de sérotypes 5a5b et 25 et les Bacillus thuringiensis de sérotypes 1 (variété thuringiensis), 3a3b (variété kurstaki), 6 (variétés subtoxicus et entomocidus), 7 (variété aizawai), 8a8b (variété morrisoni) et 14 (variété israëlensis). Les divers types de Bacillus thuringiensis et de Bacillus sphaericus peuvent être mis en oeuvre dans les compositions selon l'invention sous forme des microorganismes eux-mêmes, tels quels ou lysés, de leurs spores, des endotoxines ou des cristaux associés ou non à leurs spores ou sous plusieurs de ces formes. Ces différentes formes peuvent éventuellement être associées à des résidus du milieu de culture. De bons résultats ont été obtenus en utilisant le mélange contenant des spores et les cristaux associés qui se forme spontanément lors de l'autolyse de la bactérie en fin de sporulation. Un tel mélange peut contenir, outre les spores et les cristaux associés ou non aux spores, des cellules ou des débris de cellules ainsi que des produits solides résiduaires du milieu nutritif mis en oeuvre lors de la culture.

Les compositions selon l'invention se présentent sous la forme d'une suspension de particules solides de produits pesticides biosynthétiques dans un liquide. Ces suspensions contiennent en général de 10 à 45 % en poids et le plus souvent de 15 à 40 % en poids de produits pesticides biosynthétiques.

Les compositions selon l'invention peuvent contenir en outre divers autres additifs dont la nature et la fonction dépendent de l'utilisation de ces compositions et qui sont connus par l'homme du métier.

Les compositions selon l'invention peuvent également contenir des résidus de la fabrication du pesticide biosynthétique.

Les compositions selon l'invention se présentent sous forme de suspensions dans un liquide. Ce dernier doit être inerte vis-à-vis des pesticides biosynthétiques et il ne doit notamment pas les désactiver ni provoquer leur coagulation ni toute autre altération physique. Le liquide peut être constitué par un solvant unique ou par un mélange de solvants. En général, le solvant contient de l'eau.

De bons résultats ont été obtenus lorsque le solvant contient au moins 80 % et le plus souvent au moins 95 % en poids d'eau. En général, le liquide présent dans la composition selon l'invention est constitué essentiellement d'eau.

La présente invention concerne également des procédés pour la fabrication des compositions selon l'invention.

Pour ce faire, le sel selon l'invention est mis en oeuvre, pour former les compositions selon l'invention, à une quelconque étape de la fabrication des pesticides biosynthétiques ou de leurs précurseurs éventuels ou de la fabrication des compositions selon l'invention pour autant qu'elle soit postérieure à la fermentation des microorganismes qui génèrent lesdits pesticides.

Un procédé qui convient pour la fabrication des compositions selon l'invention consiste à prélever le milieu de culture des microorganismes générateurs des produits pesticides biosynthétiques, à en séparer l'eau par des techniques habituelles de séparation d'eau telles que la centrifugation, l'ultrafiltration, la précipitation par addition d'un non-solvant tel que l'acétone ou la floculation de manière à obtenir une pâte. Le ou les sels selon l'invention et les autres additifs éventuels sont ensuite ajoutés à cette pâte.

Dans le cas du Bacillus thuringiensis et du Bacillus sphaericus, le milieu de culture est prélevé par exemple à la fin de la phase de sporulation.

Un autre procédé consiste à séparer du milieu de culture des microorganismes générateurs de produits pesticides biosynthétiques, à la fin de la phase de sporulation, des fractions riches en endotoxines ou en spores ou en ces deux produits simultanément. Ces fractions sont ensuite traitées selon les mêmes techniques que celles utilisées pour le traitement des pâtes.

Pour obtenir des compositions sous forme de poudres sèches, on sèche la pâte ainsi obtenue par des techniques habituelles telles que le séchage par atomisation, le séchage par lyophilisation ou le séchage en tambour de manière à obtenir des particules solides contenant en général moins de 12 % et de préférence moins de 7 % d'eau.

Une autre technique consiste à ajouter le ou les sels selon l'invention et les autres additifs éventuels à la pâte avant de la sécher et à soumettre le mélange au séchage selon l'une ou l'autre des techniques indiquées ci-avant.

Pour obtenir les compositions selon l'invention sous forme de suspensions, on peut disperser les particules solides de pesticide dans une phase liquide qui contient de préférence de l'eau et qui contient en outre le ou les sels ainsi que les autres additifs éventuels, pour former une crème.

Une autre technique consiste à incorporer, dans la pâte obtenue après séparation d'eau du milieu de fermentation, le ou les sels, éventuellement sous la forme d'une solution concentrée, ainsi que les autres additifs éventuels.

Une technique préférée consiste à mettre le ou les sels selon l'invention en solution dans de l'eau, puis à y incorporer le produit pesticide biosynthétique sous la forme d'une poudre sèche, de préférence une poudre séchée par atomisation.

La présente invention concerne également un procédé pour l'utilisation des compositions.

Les compositions selon l'invention peuvent être utilisées comme pesticides et plus particulièrement comme agents pour éliminer les insectes à un stade quelconque de leur développement. Pour ce faire, elles sont pulvérisées sur les surfaces infestées, végétaux, fleuves, rivières et toute étendue d'eau selon toutes méthodes connues en elles-mêmes telles que la pulvérisation manuelle, la pulvérisation mécanique et plus particulièrement la pulvérisation par voie aérienne. Elles peuvent notamment être pulvérisées sur les surfaces infestées par des insectes et plus particulièrement par des lépidoptères, des diptères, des coléoptères, des aphaniptères, des orthoptères, des isoptères et des homoptères.

Les doses à mettre en oeuvre sont fonction du pesticide biosynthétique utilisé et de l'agent pathogène à éliminer.

Dans le cas du Bacillus thuringiensis et du Bacillus sphaericus, on pulvérise en général de 50 à 5000 g de particules solides à l'hectare. Les compositions selon l'invention peuvent être pulvérisées telles quelles lorsqu'elles se présentent sous forme de suspensions. Elles peuvent être également dispersées, diluées ou émulsionnée dans un diluant comme l'eau ou un diluant organique. Dans ce cas, on les dilue par 1 à 300 fois, habituellement 2 à 120 fois et de préférence 4 à 60 fois leur volume de diluant.

Les exemples qui suivent servent à illustrer l'invention.

Exemple 1

Dans un fermenteur BIOLAFFITE de 15 l équipé d'un agitateur, d'une sonde de pH, d'une sonde d'oxygène, d'un système d'aération, stérilisable, on introduit 450 g de farine de soja contenant 52 % environ de protéines, 250 g d'amidon hydrolysé, 20 g de $KH_2PO_4$, 20 g de $K_2HPO_4$, 3,2 g de $MgSO_4.7H_2O$, 0,12 g de $MnSO_4.H_2O$, 0,14 g de $ZnSO_4.7H_2O$, 0,2 g de $Fe_2(SO_4)_3$, 1,5 g de $CaCl_2.H_2O$ et 10 d'eau.

On mélange ce milieu de culture jusqu'à ce qu'il soit homogène; on amène le pH de ce milieu à 7.

On stérilise ce milieu de culture à 120°C durant 30 minutes. On le refroidit jusqu'à amener le milieu de culture à une température de 30°C et on introduit stérilement dans le fermenteur 1 l d'une culture de Bacillus thuringiensis sérotype 14 (variété israelensis) en phase de croissance.

Le fermenteur est agité à 450 tours par minute et aéré à 0,4 vvm (volume d'air par volume de milieu par minute).

Après 32 heures, le Bacillus thuringiensis se présente sous la forme d'une bactérie sporulée partiellement lysée. Cette culture contient $1,1.10^9$ spores par ml et son pH est de 7,5. On ajoute 2 pour mille d'acide citrique en poudre au produit ainsi obtenu.

Le pH de ce produit est ajusté à 4,8 par addition d'acide phosphorique.

Le produit ainsi obtenu est concentré par centrifugation pour donner une pâte contenant environ 12 % de matières sèches et cette pâte est atomisée en vue de donner une poudre contenant environ 6 % d'eau.

On met ensuite en solution 22,5 g de sulfate d'ammonium dans 75 ml d'eau à température ambiante et on incorpore dans cette solution 25 g de poudre obtenue ci-avant.

La crème obtenue est très fluide. Le temps d'écoulement de 5 ml de cette crème au travers d'une pipette graduée standard de 10 ml est de 1,8 secondes à température ambiante.

Cette crème se disperse spontanément dans l'eau.

Après 30 jours à 20°C on n'observe aucune perte d'activité insecticide. Lors d'un test de vieillissement accéléré, c'est-à-dire après 25 jours à 45°C, on n'observe qu'une légère perte d'activité insecticide (inférieure à 30 %, la précision des mesures d'activité insecticide étant de l'ordre de 20 %.

Exemple 2

On met en solution 15 g de sulfate de sodium dans 75 ml d'eau à température ambiante.

On incorpore dans cette solution 25 g de la poudre telle que décrite à l'exemple 1.

La crème obtenue est très fluide. Le temps d'écoulement de 5 ml de cette crème au travers d'une pipette graduée standard de 10 ml est de 2,7 secondes à température ambiante.

Cette crème se disperse spontanément dans l'eau.

Après 30 jours à 20°C, on n'observe aucune perte d'activité insecticide.

Lors d'un test de vieillissement accéléré, c'est-à-dire après 25 jours à 45°C, on n'observe qu'une légère perte d'activité insecticide (inférieure à 30 %).

Exemple 3R (de comparaison)

On incorpore 25 g de poudre telle que décrite à l'exemple 1 dans 75 ml d'eau.

La crème obtenue est visqueuse. Le temps d'écoulement de 5 ml de cette crème au travers d'une pipette graduée standard de 10 ml est de plus de 60 secondes à température ambiante.

Cette crème ne se disperse pas dans l'eau.

Exemple 4R (de comparaison)

On met en solution 18,75 g de chlorure de sodium dans 75 ml d'eau à température ambiante.

On incorpore dans cette solution 25 g de la poudre telle que décrite à l'exemple 1.

La crème obtenue est visqueuse; elle présente un temps d'écoulement supérieur à 60 secondes.

Exemple 5R (de comparaison)

On met en solution 15 g de chlorure d'ammonium dans 75 ml d'eau à température ambiante.

On incorpore dans cette solution 25 g de la poudre telle que décrite à l'exemple 1.

La crème obtenue est visqueuse, elle présente un temps d'écoulement supérieure à 60 secondes.

Exemple 6R (de comparaison)

On met en solution 15 g de $(NH_4)H_2PO_4$ - (Phosphate d'ammonium mono basique) dans 75 ml d'eau à température ambiante.

On incorpore dans cette solution 25 g de la poudre telle que décrite à l'exemple 1.

La crème obtenue est légèrement visqueuse, elle présente un temps d'écoulement de 23,2 secondes.

Cette crème ne se disperse pas dans l'eau.

Exemple 7R (de comparaison)

On met en solution 15 g d'acétate d'ammonium dans 75 ml d'eau à température ambiante.

On incorpore dans cette solution 25 g de la poudre telle que décrite à l'exemple 1.

La crème obtenue est visqueuse. Elle présente un temps d'écoulement supérieur à 60 secondes.

Exemple 8R (de comparaison)

On met en solution 15 g de sulfate de magnésium dans 75 ml d'eau à température ambiante.

On incorpore dans cette solution 25 g de la poudre telle que décrite à l'exemple 1.

La crème obtenue est visqueuse. Elle présente un temps d'écoulement supérieur à 60 secondes.

Exemples 9 et 10

A la culture telle que décrite à l'exemple 1, sont ajoutés 4 pour mille d'une solution à 25 % d'orthophénylphénol dans du méthanol, puis 2 pour mille d'acide citrique en poudre.

Le pH de ce produit est ajusté à 4 par addition d'acide phosphorique.

Le produit ainsi obtenu est concentré par centrifugation pour donner une pâte contenant environ 13 % de matières sèches.

On mélange dans 61 l de méthanol 23 kg de parahydroxybenzoate de méthyle et 21 kg d'une solution aqueuse contenant 33 % de 1,2-benzisothiazoline-3-one, puis 11 kg d'un agent tensioactif (oxyde d'éthylène sur alkylphénol).

6,7 l de ce mélange sont ajoutés par m³ de pâte.

Le produit obtenu est atomisé; une poudre contenant environ 6 % d'eau est obtenue.

On met en solution 30 g de sulfate d'ammonium dans 75 ml d'eau à température ambiante.

On incorpore dans cette solution 25 g de poudre pour l'exemple 9 et 30 g de poudre pour l'exemple 10.

Les crèmes obtenues sont très fluides, elles présentent un temps d'écoulement de 1,7 secondes pour l'exemple 9 et de 1,9 secondes pour l'exemple 10.

Ces crèmes se dispersent spontanément dans l'eau.

Après 30 jours à 20°C, on n'observe aucune perte d'activité insecticide. Lors d'un test de vieillissement accéléré, c'est-à-dire après 25 jours à 45°C on n'observe qu'une légère perte d'activité insecticide (inférieure à 30 %)

Exemples 11 et 12

On met en solution 13,5 g de sulfate de sodium dans 75 ml d'eau à température ambiante.

On incorpore dans cette solution 25 g de poudre pour l'exemple 11 et 30 g de poudre pour l'exemple 12, poudre telle que décrite à l'exemple 9.

Les crèmes obtenues sont très fluides, elles présentent un temps d'écoulement de 1,9 seconde pour l'exemple 11 et de 2,1 secondes pour l'exemple 12.

Ces crèmes se dispersent spontanément dans l'eau.

Après 30 jours à 20°C on n'observe aucune perte d'activité insecticide. Lors d'un test de vieillissement accéléré, c'est-à-dire après 25 jours à 45°C on n'observe qu'une légère perte d'activité insecticide (inférieure à 30 %).

**Revendications**

1 - Compositions contenant des produits pesticides biosynthétiques provenant de microorganismes de l'ordre des Bacillacées sous forme de particules solides en suspension dans un liquide et contenant au moins un sel caractérisées en ce que ce sel est choisi parmi le sulfate d'ammonium, le sulfate de sodium ou un mélange de ceux-ci.

2 - Compositions selon la revendication 1 caractérisées en ce que la quantité de sel est comprise entre 10 et 60 % en poids de liquide.

3 - Compositions selon la revendication 2 caractérisées en ce que la quantité de sulfate d'ammonium mise en oeuvre est comprise entre 20 et 50 % en poids de liquide.

4 - Compositions selon la revendication 2 caractérisées en ce que la quantité de sulfate de sodium mise en oeuvre est comprise entre 12 et 25 % en poids de liquide.

5 - Compositions selon l'une quelconque des revendications précédentes caractérisées en ce que les microorganismes de l'ordre des Bacillacées sont des microorganismes des types Bacillus thuringiensis ou Bacillus sphaericus.

6 - Procédé pour la fabrication de compositions selon l'une quelconque des revendications précédentes, caractérisé en ce que l'on met le sel en solution dans l'eau et qu'on y incorpore le produit pesticide biosynthétique.

7 - Procédé selon la revendication 6 caractérisé en ce que le produit pesticide biosynthétique mis en oeuvre est une poudre séchée par atomisation.

8 - Procédé pour éliminer les insectes, caractérisé en ce qu'on pulvérise sur les surfaces infestées les compositions selon l'une quelconque des revendications 1 à 5.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 247 677 (HOECHST) --- | 1-8 | A 01 N  63/00 |
| A,D | FR-A-1 393 646 (INTERNATIONAL MINERALS) * Page 3, colonne de gauche, paragraphe 2 * --- | 1-8 | |
| A | CH-A-  428 313 (ROHM & HAAS) * Colonne 11, lignes 24-36 * & US-A-3 087 865 (Cat. D) ----- | 1-8 | |

DOMAINES TECHNIQUES RECHERCHES (Int. Cl.5)

A 01 N

Le présent rapport a été établi pour toutes les revendications

| Lieu de la recherche | Date d'achèvement de la recherche | Examinateur |
|---|---|---|
| LA HAYE | 17-05-1990 | DECORTE D. |